# EUROPEAN PATENT SPECIFICATION

(11) **EP 1 378 825 B1**
(45) Date of publication and mention of the grant of the patent: **21.04.2010**
(21) Application number: 02425437.7
(22) Date of filing: 02.07.2002
(51) Int. Cl.: G06F 9/38

(54) **A method for executing programs on selectable-instruction-length processors and corresponding processor system**
Verfahren zur Ausführung von Programmen in einem Prozessor mit auswählbaren Befehlslängen, und entsprechendes Prozessorsystem
Procédé d'exécution de programmes dans un processeur à longueur sélectionnable d'instruction, et système de processeur correspondant

(43) Date of publication of application: 07.01.2004
(73) Proprietor: STMicroelectronics Srl, 20041 Agrate Brianza (MB) (IT)
(72) Inventor: Rovati, Fabrizio Simone, 20092 Cinisello Balsamo, Milano (IT); Borneo, Antonio Maria, 75100 Matera (IT); Pau, Danilo Pietro, 20099 Sesto San Giovanni, Milano (IT)
(74) Representative: Bosotti, Luciano

(56) References cited:
- EP-A- 0 924 603
- EP-A- 1 102 166
- EP-A- 1 152 329
- WO-A-00/33186
- WO-A-01/53933
- BIGLARI-ABHARI M ET AL: "IMPROVING BINARY COMPATIBILITY IN VLIW MACHINES THROUGH COMPILER ASSISTED DYNAMIC RESCHEDULING" PROCEEDINGS OF THE EUROMICRO CONFERENCE. EUROMICRO 26. , vol. 1, 5 - 7 September 2000, pages 386-393, XP010514804 LOS ALAMITOS, CA, US

## Description

### Field of the invention

The present invention relates to processors and methods for processing signals that can be implemented using said processors.

### Description of prior art

In cell-phone systems of the second generation (for example GSM) or of a more advanced type (GPRS, EDGE, UMTS), the most widely used architecture consists of a system made up of two processors. The first processor, which is specialized in handling the part with the largest computational burden, typically consists of a Digital Signal Processor or DSP. The other processor, with tasks of control, synchronization and execution of high-level applications, is typically configured as a CPU.

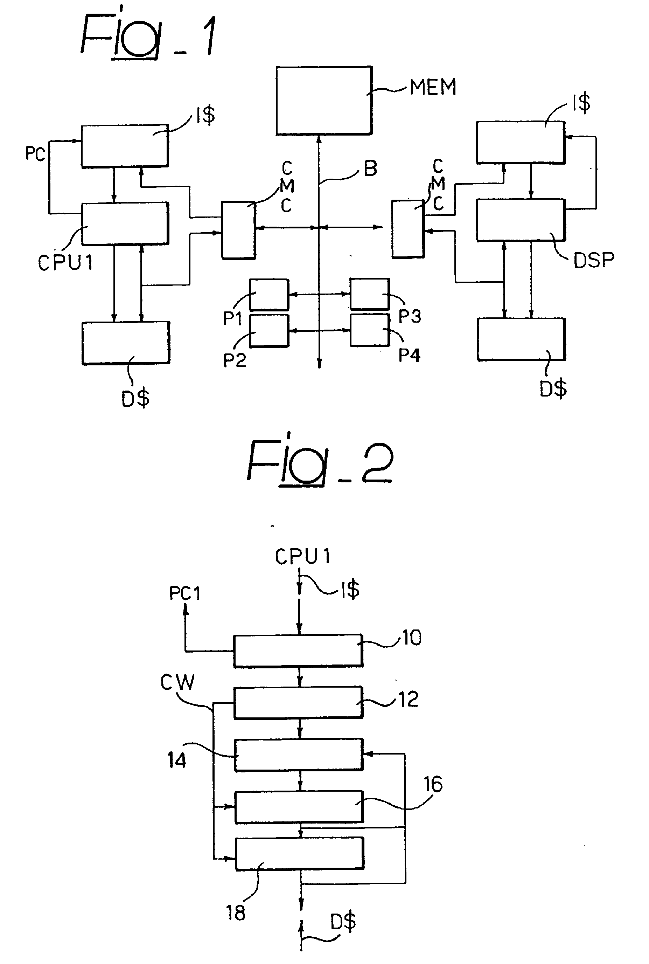

An example of architecture of this sort is illustrated in Figure 1, where the aforesaid processors, designated respectively by DSP and CPU 1, are illustrated together with the cache memories associated thereto, namely together with instruction cache memories I$ and data cache memories D$, respectively.

Designated by CMC are the interface modules, referred to as Core Memory Controllers, which enable two sub-systems coming under the two processors DSP and CPU 1 to interface with one another by means of a main bus B with the main system memory MEM and with the various peripheral units P1, P2, P3, P4, ... associated to the system.

The specific application in the telephony sector is, on the other hand, referred to herein purely in order to provide an example and consequently does not imply ? even indirectly ? any limitation of the altogether general character of the invention described in what follows. The said invention may, in fact, be applied in all those fields in which it may be useful or advantageous to employ a microprocessor.

With reference to the diagram of Figure 1, the CPU 1 is typically a 32-bit pipelined scalar microprocessor. By "pipelined scalar" is meant that its internal architecture is made up of different logic stages, each of which contains an instruction in a very specific state. The said state may be that of:
- fetching of the instruction from the memory,
- decoding of the instruction,
- addressing of a register file,
- execution,
- writing/reading of data from the memory.

The number of bits on which the CPU 1 operates is related to the width of the data on which the machine is operating. The instructions are generated and executed in turn, in a specific order defined by compiling.

The other processor, designated by DSP, is typically a superscalar microprocessor or 128-bit pipelined VLIW (acronym for Very Long Instruction Word) microprocessor.

"Pipelined superscalar" means that its internal architecture is made up of different logic stages, some of the which are able to execute instructions in parallel, for example in the execution step. Typically, the parallelism is of four instructions each (equal to 128 bit) whilst the data are expressed in 32 bits.

The processor is said to be superscalar if the instructions are re-ordered dynamically in the execution step in order to supply the execution stages which can potentially work in parallel, also altering the order generated statically by compiling of the source code, if the instructions do not present any mutual dependence. The main disadvantage of this approach lies in the complexity of the resulting machine, in which the logic of scheduling of the instructions may prove one of the most important parts in terms of number of gates.

The term VLIW processor is used if the instructions are re-ordered statically in the compiling step and executed in the pre-set order, which is not modifiable in the execution step. The advantage of the said approach is that it eliminates all the logic of management of the scheduling since this task is performed during compiling.

The main disadvantage lies in the fact that the compiled code is strictly dependent upon the implementation of the machine on which it is executed. For example, given the same instruction-set architecture (ISA), a machine with N execution units cannot execute a compiled code for a machine with K execution units if K is not equal to N. From this it follows that there is no "binary compatibility" between different generations of processors with the same ISA.

It is to be recalled that by "binary compatibility" is meant the property existing between a group of processors each of which is able to execute one and the same binary machine-code datum.

Likewise, it is not possible to create multiprocessor systems (each with a different number of execution units), which can change processes in the course of execution.

In the diagram of Figure 1, each processor possesses its own data cache D$ and its own instruction cache I$, so as to be able to load from the main memory MEM both the data on which to operate and the instructions to be executed in parallel. Since the two processors CPU 1 and DSP are connected to the main memory MEM through the system bus B, the two processors are typically found competing for access to said memory when an instruction and/or the data on which they are to operate must be located in the main memory, the said instruction or data not being available in their own caches.

A system based upon the architecture represented in Figure 1 has a sharing of work and of processes that is rigid and not modifiable, such as to render asymmetrical the workload and the software programs to be executed.

By way of reference, a processor such as the CPU 1 usually possesses 16 Kbytes of data cache and 16 Kbytes of instruction cache, whereas the DSP usually possesses 32 Kbytes of data cache and 32 Kbytes of instruction cache.

The flowchart of Figure 2 illustrates the logic diagram of the CPU described from top to bottom. The first stage, designated by 10, generates the memory address to which the instruction to be executed is associated, the said address being referred to as program counter. The stage 10 is hence configured typically as a fetch stage, whilst the instruction thus loaded is decoded in the stage 12 separating the bit field which defines its function (for example, addition of 2 values contained in two registers located in the register file) with respect to the bit fields which address the operands. The said addresses are sent to a register file from which (in a stage designated by 14) are read the operands of the instruction. The operands and the bits which define the function to be executed are sent to the execution unit which, in a stage 16, performs the desired operation, for example the operation of addition referred to previously. The result can thus be re-stored in the register file in a stage 18 currently called write-back stage.

The process schematically represented in Figure 2 operates in combination with a load/store unit which enables reading/writing of any possible data in memory with the aid of specific instructions dedicated to the purpose.

It may be readily appreciated that the set of instructions is in biunique correspondence with a given microprocessing CPU architecture.

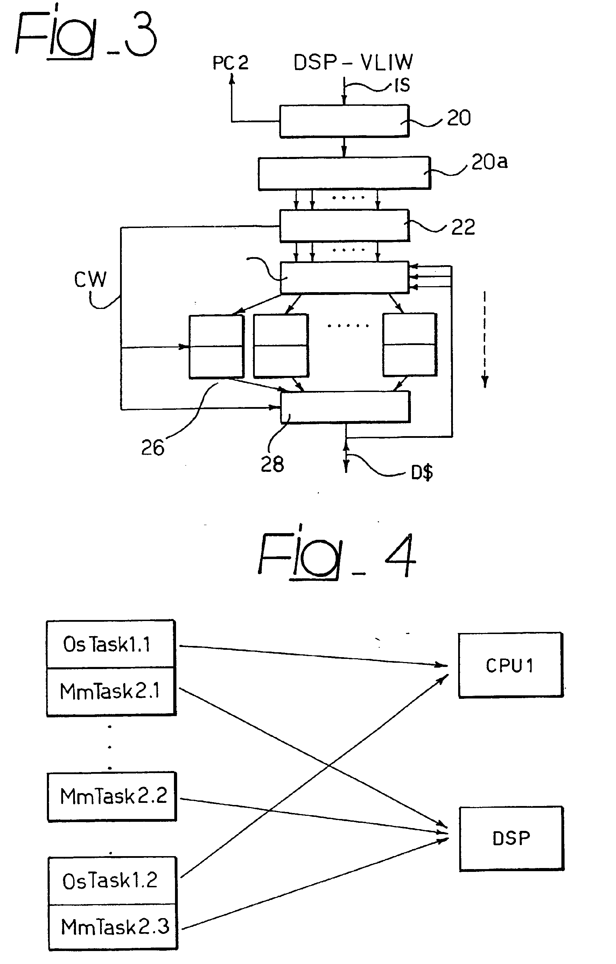

The flowchart of Figure 3 shows, instead, the logic diagram of the DSP. Also in this case, there is envisaged an initial fetch stage 20, associated to which there is logically cascaded a stage 20a for issuing instructions. The reference number 22 designates, instead, a decoding stage whilst the reference number 24 designates a register file (see the stages 14 and 16 of Figure 2). The reference number 28 designates a stage for re-storage in the register file, which is in general akin to the stage 18 of Figure 1. In the diagram of Figure 3 the reference number 26 designates collectively a plurality of execution stages that can be executed in parallel.

Both in Figure 1 and in Figure 3 the reference CW designates the branching lines of the control words.

It will be appreciated that the main difference between the diagram of Figure 2 and the diagram of Figure 3 is provided by the fact that the diagram of Figure 3 envisages the possibility of working in parallel on different sets of instructions. Another difference lies in the fact that the diagram of Figure 3 envisages the use of a greater number of execution units available, which can operate in parallel in a superscalar and VLIW processor. In both cases, the set of instructions is in biunique correspondence with a given microprocessing architecture.

Assuming that the two sets of instructions designed to be executed by the processors CPU 1 and DSP are different from one another (as is commonly the case with the architecture of wireless processors) it is understandable that instructions (and hence tasks to be executed), which can be executed the processor CPU 1 cannot be executed by the DSP, and vice versa.

For the above to be possible, it is necessary to compile each process for each processor, thus increasing the memory of the program. Whenever a process is to be executed by a specific processor, it is then necessary to load and execute the code of the particular task that has been compiled for that processor. There is moreover encountered the problem linked to the fact of having to correlate the different points of partial execution of the programs when they are to be shifted from one processor to another (i.e., re-map the program counters correctly) and of having to convert all the processing data from the representation system of one processor to the representation system of another (for example, the contents of the state and general-purpose registers).

The above problems are difficult to solve, so that in general a process is compiled and executed on a single processor.

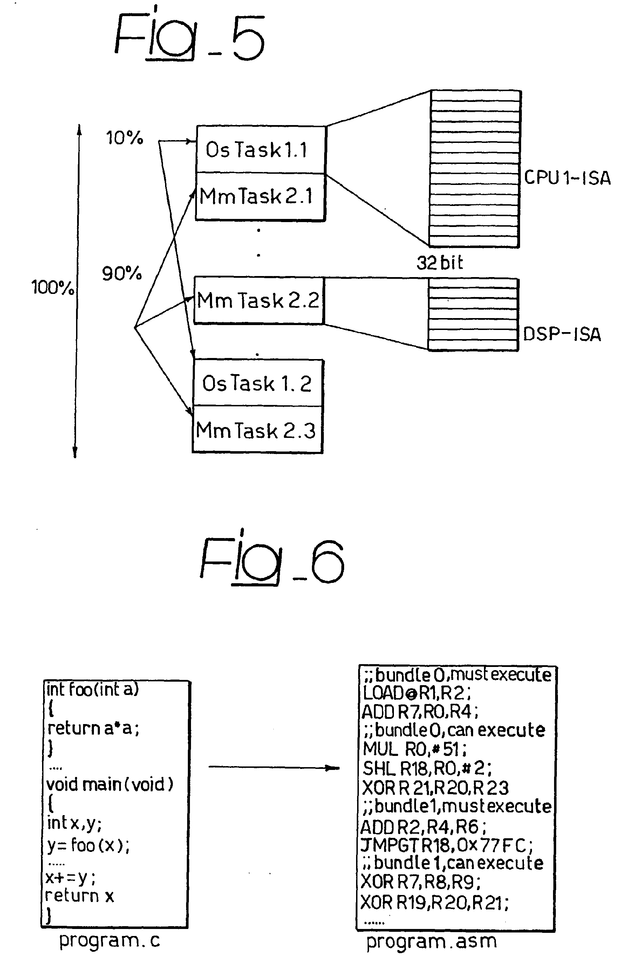

With reference to Figures 4 and 5, it is possible to consider a sequence of sets of instructions of said processes.

In general, two types of processes are distinguished, namely:
- those corresponding to the operating system and to applications that use calls to functions of the operating system, and
- those regarding the processing of multimedia (audio/video/graphic) contents.

Specifically, in the diagram of Figure 4 the references OsTask 1.1, 1.2, etc. illustrate processes which can be executed by the processor CPU 1. The processes designated by MmTask2.1, MmTask2.2, MmTask2.3, identify, instead, processes compiled so as to be executed by the DSP.

Starting from the diagram of Figure 4, which illustrates a possible assignment of the task to two processors, it is immediately possible to return to the diagram of Figure 5, which illustrates the corresponding flow of instructions.

Setting equal to one hundred the total time of execution of the processes, it is noted that the first processes typically last 10% of the time, whilst the second occupy a much greater part, corresponding to 90%.

Again, the first processes contain instructions generated by the compiler of the processor CPU 1 and hence can be executed by the latter, but not by the DSP. For the latter processes the situation is exactly complementary, in the sense that they contain instructions generated by the compiler of the DSP and can hence be executed by the said processor, but not by the other processor CPU 1.

It is moreover to be noted that the processor CPU 1 is characterized by a compiling flow of its own, which is independent of and distinct from that of the DSP.

Given the modest workload, it may be appreciated that the processor CPU 1 could even be turned off when not in use, so enabling a considerable energy saving.

The above hypothetical solution (switching-off of the processor CPU 1 when it is not being used) comes up, however, against the fact that the corresponding switching-off or powering-down procedures introduce additional processing latencies and these are added to the value of 10% mentioned previously. The aforesaid procedures envisage in fact:
- switching off the processor CPU 1, except for the respective register file by gating the clock signal which supplies all the internal registers;
- switching off the processor CPU completely, except that power supply is maintained for the cache memories; and
- switching off the CPU as a whole, including the data and instructions caches.

However, given that the state of the individual processor must be restored when the latter is turning back on following upon one of the operations referred to previously, the latencies introduced vary from tens of microseconds to tens or hundreds of milliseconds. The above latencies prove particularly costly, both from the energy standpoint and from the computational standpoint.

Finally, the DSP is forced to work at approximately 90% of its computational capacity. This implies an evident asymmetry in the workload of the processor CPU as compared to the workload of the DSP, an asymmetry which is revealed also in the power-management algorithms, which are distinct for the two processors.

EP 1 152 329 A (AGERE SYSTEMS GUARDIAN CORP) 7 November 2001 (2001-11-07) discloses a multithreaded VLIW processor with instruction packet splitting that allows an instruction packet to be partially issued in one cycle, with the remainder of the packet issued during a subsequent cycle. The compiler puts a split bit into the VLIW to indicate that the packet can be split. It is set if no RAW hazards would be caused by splitting.

### Purposes and summary of the invention

The purpose of the present invention is to provide a solution capable of overcoming the drawbacks outlined previously.

According to the present invention as set out in claims 1 and 11, the said purpose is achieved thanks to a process having the characteristics referred to specifically in the claims that follow. The invention also regards the corresponding processor system, in particular multiprocessor system.

The present invention appears therefore both as a variant and as a possible integration with respect to the solution described in the European patent application No. 01830814.8.

Basically, the solution according to the invention enables instantiation of a new class of processors with instruction length selectable by the processor itself. The above is obtained by creating an architecture which can be defined, using a terminology introduced in the present description, as "Selectable-Instruction-Length Computer" (SILC), where the instruction-level parallelism (ILP) is statically extracted from the compiler.

The foregoing is, however, obtained in such a form as not to jeopardize binary compatibility between different SILC processors having the same instruction set architecture (ISA) but different parallelism of execution.

In addition, the code may be executed in an optimal number of cycles with respect to the maximum parallelism allowed by the processor.

The solution according to the invention thus enables, in principle, the following requirements to be met:
- assurance of binary compatibility between two or more SILC processors having the same instruction set but different execution parallelism, this being obtained without using purposely dedicated complex hardware, as instead is the case in superscalar processors; and
- execution of programs indistinctly on two or more SILC processors constituting the system in dynamically variable working conditions, the said processors being characterized in that they present the same instruction set architecture (ISA), but a different maximum parallelism of instructions executable in a given cycle.

More specifically, the solution according to the invention affords the possibility of executing code compiled using a compiler which presents intrinsic parallelism at the level of code instructions, preserving the possibility of executing said code on machines that implement the same instruction set architecture (ISA), but with a different number of execution units. In this way, it is possible to have a different specification of the maximum number of instructions that can be performed in a single cycle.

The above result may be obtained with a processor operating according to the invention, consequently with a selectively determinable length of instructions, in conditions in which the compiler reveals the maximum parallelism at the instruction level inherent in the code and inserts into the compiled code signs or symbols (tokens) for identifying instructions which *must* be executed before others, as well as instructions which *can* be executed before others.

The decoding unit of the SILC processor selects, on the basis of the aforesaid symbols and of the maximum parallelism of the processor instance, how many instructions can be issued per cycle.

In this way, it is possible to achieve the following:
- binary compatibility between different generations of processors that share the same instruction-set architecture (ISA) but with different implementations, with different numbers of execution units;
- optimal performance for each processor with a different number of execution units: a processor with a higher execution parallelism will require fewer cycles to execute the same code, as compared to another processor with the same ISA but fewer execution units;
- minimization of the hardware complexity by transferring the function of extraction of the parallelism at the moment of compiling; and
- availability of a multiprocessor system based upon an array of SILC processors which have the same ISA value but which implement different levels of parallelism, this being achieved with the added possibility of re-allocating dynamically the processes from one processor to another in order to minimize the global clock frequency of the system.

### Brief description of the attached drawings

The invention will now be described, purely by way of non-limiting example, with reference to the attached drawings, in which:
- Figures 1 to 5, which substantially regard the prior art, have already been described previously;
- Figure 6 illustrates the working principle of a processor according to the invention, the explanation proceeding in Figures 7 to 13;
- Figure 14 illustrates a multiprocessor architecture that is able to implement the invention;
- Figure 15 illustrates the criteria of assignment of the tasks in the multiprocessor system of Figure 14;
- Figures 16 and 17 illustrate, in greater detail, the criteria of execution of the aforesaid tasks in the processor of Figure 14; and
- Figure 18 is an example of a table for execution of processes referring to a solution according to the invention.

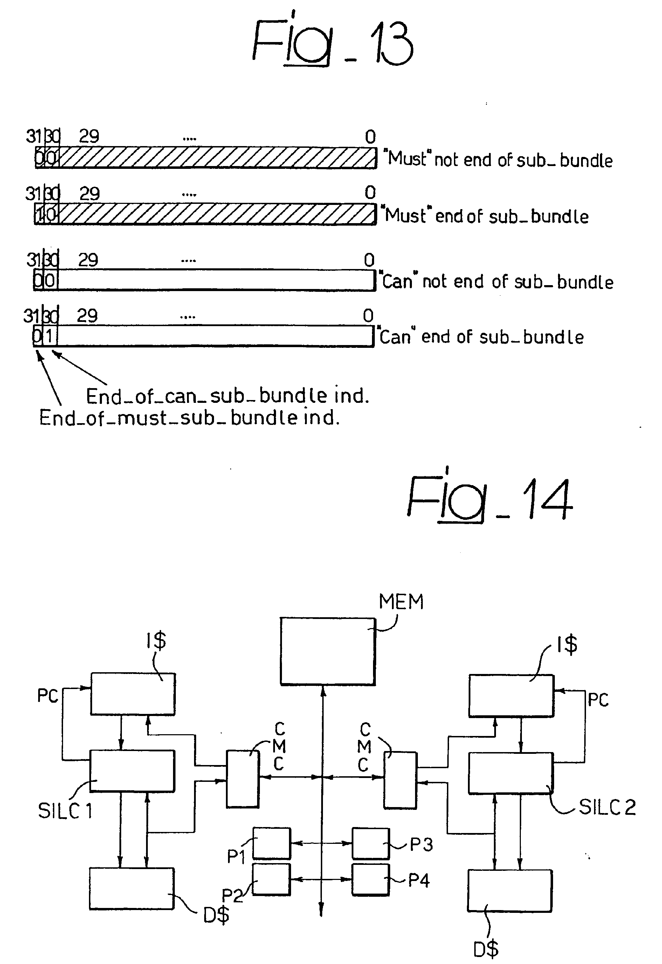

A processor according to the invention (hereinafter referred to by the acronym SILC) can be used to particular advantage in the context of a multiprocessor structure of the type represented in Figure 14, to which we shall return in what follows.

Basically, a processor according to the invention presents the characteristic that, like a VLIW processor, it exploits the compiler to extract the parallelism at the instruction level and to reduce in this way the constructional complexity of the hardware.

Unlike what occurs in a normal VLIW processor, in the processor according to the invention the compiled code is not executable only on a processor with a given parallelism, as presupposed by the compiler, but can be executed by different SILC processors characterized by one and the same ISA but with different levels of parallelism. The foregoing is obtained, at the same time achieving levels of performance that increase as the maximum number of instructions that a processor executes in a single cycle increases.

A VLIW compiler must in fact know exactly how many execution units the processor for which it is compiling the code has and which ones these are. The aim of this is to generate the number of instructions that the processor must perform at each cycle. If, for instance, a processor with parallelism 4 is specified, the compiler tries to get up to four instructions per cycle to be executed. If the code is executed on a processor with parallelism 8, four units remain unused. Instead, such a code cannot be executed on a processor with just two execution units.

A superscalar processor uses, instead, dedicated hardware resources (which may be very costly) in order to understand how many instructions it can execute.

Consequently, the solution according to the invention maintains the flexibility of a superscalar processor, whilst eliminating the additional hardware complexity.

The compilation-execution flow of a SILC processor envisages the steps described in what follows.

In the first place, the compiler receives as input a program written, for example, in C code or in any other high-level language or even in assembler language.

Subsequently, the compiler translates the said program into native instructions of the processor. While carrying out the translation, the compiler extracts also the maximum parallelism, at the level of assembler instructions, intrinsic in the code (or, alternatively, up to any set maximum of instructions per cycle), or else indicates which instructions can be executed in parallel without this causing a variation in the behaviour of the program due to any dependency of data upon one instruction or another.

Each set of instructions that can be executed in parallel is defined as a "bundle".

In so doing, the compiler does not assume anything specific as regards the number of execution units that the processor on which the code is being executed has available. The compiler extracts all the possible parallelism inherent in the code, or else up to a given number of instructions per cycle that may be deemed reasonable according to the options that may be entered at input to the compiler.

In each bundle, it is in general possible to distinguish two categories of instructions. The first of said categories comprises the instructions that *must* necessarily be executed before the ones belonging to the next bundle owing to the fact that the latter receive, at input, data processed by the former. This first type of instructions may be defined as "must" instructions. The other category of instructions consists of instructions that can be executed both before the next bundle and in parallel with the next bundle, in so far as they do not have any specific dependency upon the instructions present in the next bundle. This second type of instructions may be defined as "can" instructions.

In each bundle, there may be present a set (including the null or empty set, i.e., with zero instructions) of each of the two categories.

For instance, the diagram of Figure 6 shows how a C code (represented on the left) is compiled in the set of native instructions of the SILC processor, extracting the maximum parallelism value, or else the maximum value of said parallelism up to a pre-defined upper limit, on the basis of the indications supplied to the compiler. The aforesaid maximum value is currently indicated by ILP. The instructions that can be executed in parallel are grouped together in the aforesaid bundles.

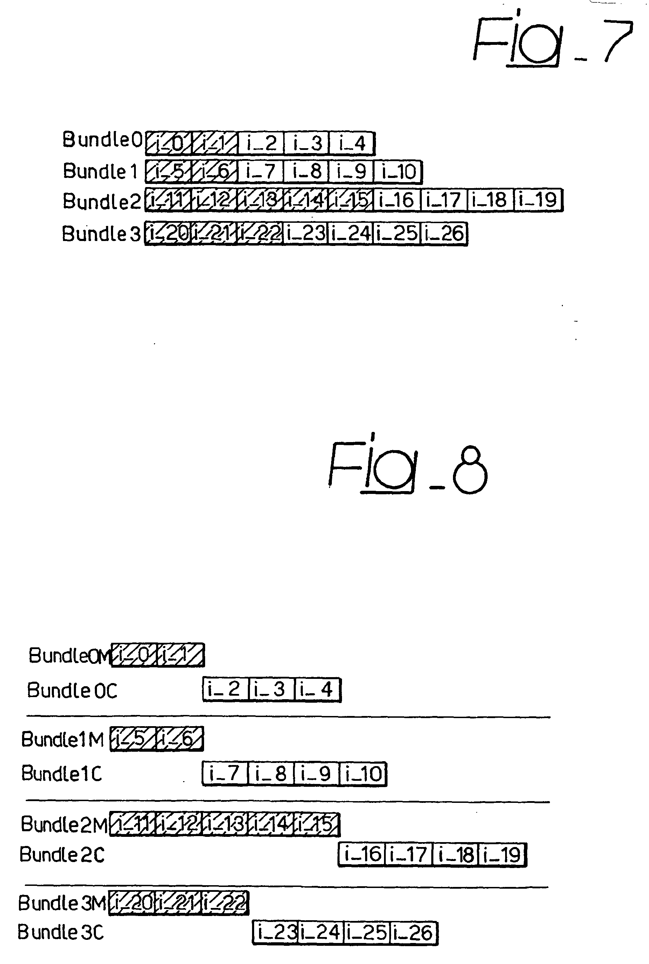

As is represented more clearly in Figure 7, each set of instructions referred to as bundle is in general made up of both instructions that *must* necessarily be executed before execution of the next bundle and instructions that can be executed before the next bundle or else in parallel with the next bundle.

Consequently, the assembler instructions can be labelled as "must" instructions or "can" instructions according to the category in which the respective instruction is found. As has already been said, each bundle can contain any number (including zero) of instructions forming each set.

As a consequence of the partition described above, it is possible to define a sequence of sub-sets or sub-bundles of the "must" type or of the "can" type (each containing zero or more instructions) designed to alternate in the execution of the program, as is represented in Figure 8.

At this point, any SILC processor that executes instructions from the set of instructions used by the compiler can execute the compiled code and can select automatically each time, through the indications of "must"/"can" sub-bundles given by the compiler, the length of instructions to be executed cycle by cycle, or else the number of assembler instructions to be executed in each cycle.

The processor selects the said length starting from a given set of rules, such as typically:
- the processor always tries to load the maximum number of instructions that it can execute;
- the processor can execute all the instructions loaded if and only if there are not present any "must" instructions belonging to different bundles (situations of conflict or "must-must hazard" situations). In the above case, it can execute only the instructions up to the first one corresponding to the second sub-bundle of a "must" type, excluding the latter. Instead, it will have to delay execution of the "must" instructions of the second bundle at the next cycle.

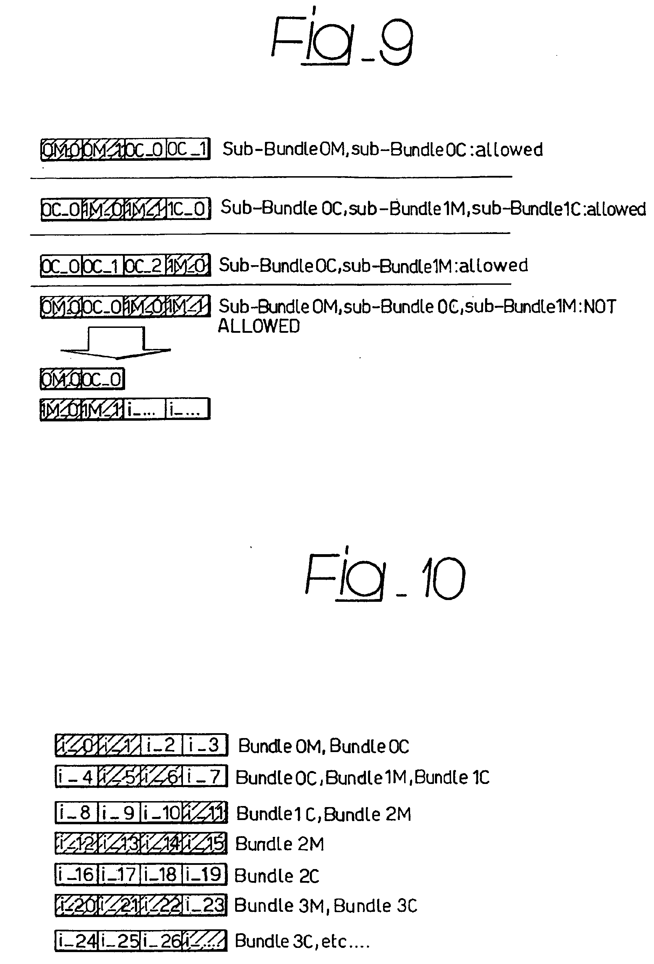

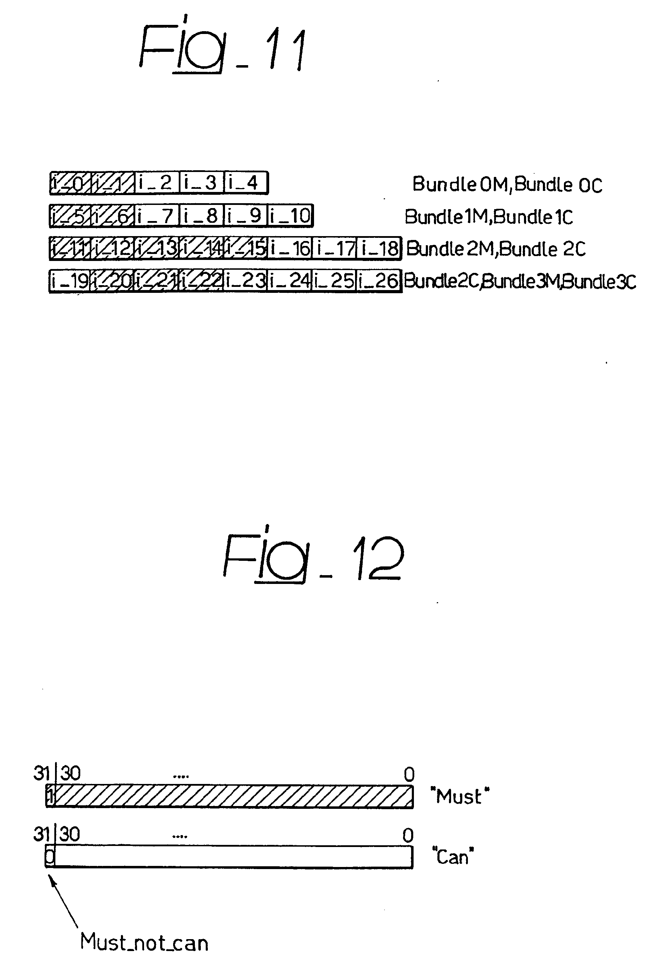

The diagrams of Figures 9 to 11 show typical examples of "mixtures" of different types of bundles and examples of the corresponding frequency of code execution on processors with parallelism 4 (Figures 9 and 10) and parallelism 8 (Figure 11).

In particular, Figure 9 refers to a generic flow of four sub-bundles 0M, 0C, 1M and 1C, where M stands for "must" and C stands for "can".

In particular, proceeding from the top, it is noted that the first three examples lead to configurations for which it is possible to proceed immediately with the execution.

Instead, the fourth combination represented, in which a sub-bundle 0M is present, a sub-bundle 0C and a sub-bundle 1M cannot immediately receive granting of execution, in so far as a phenomenon of conflict or must-must hazard occurs.

In the above case, a splitting operation is performed by allocating the set sub-bundle 0M, sub-bundle OCX and the set sub-bundle 1MX on two different cycles, it being possible to add, during execution of the second cycle, other instructions of a "must" type or a "can" type of the same bundle 1.

Figure 10 shows, instead, an example of execution of the compiled code illustrated in Figures 7 and 8 on a machine with four execution units, hence with parallelism 4.

The operation illustrated envisages an execution in seven cycles.

Figure 11 refers, instead, to an example of execution of the same compiled code as the one shown in Figures 7 and 8 on a machine with parallelism 8, i.e., with eight execution units.

In the above case, the overall execution of the code envisages four cycles. During the first two cycles, it is not possible to execute more instructions than the ones represented, since execution in parallel of "must" instructions belonging to different bundles is forbidden, as it constitutes a must-must conflict event.

It may, therefore, be noted that the same code compiled without referring to any particular parallelism of execution can be executed on machines with different parallelisms, obtaining levels of performance which, obviously, scale with the number of execution units in parallel. Of course, the increase in the number of execution units available reduces the number of cycles necessary for execution.

The information regarding the different types of sub-bundles of a "must" type or "can" type can be encoded according to different criteria.

Some possible criteria are listed below by way of example.

As illustrated in Figure 12, the meaning "must_not_can" can be assigned to one bit of the instruction. In this way, all the instructions belonging to the "must" sub-bundle will have said bit set at "1". All the instructions belonging to the "can" sub-bundle will have said bit set at "0". The passage from one sub-bundle to another is hence identified by inversion of said bit.

In the case where the number of instructions belonging to a "can" sub-bundle is zero, it becomes necessary to add a fictitious "can" instruction of a no-operation (nop) type in order to indicate the passage from one "must" bundle to another. The same occurs in the opposite case of two "can" bundles with interposition of a "must" bundle made up of zero instructions (even though this case, in actual fact, appears unlikely to occur). As an alternative, it is possible to assign the meaning of "last instruction of a "must" sub-bundle" and the meaning "last instruction of a "can" sub-bundle" to two distinct bits. This solution is illustrated schematically in Figure 13.

In this way, an extra bit is used, but the need for introducing redundant instructions of a no-operation (nop) type in the case of presence of a zero-instruction sub-bundle is eliminated.

The solution according to the invention means that, for supporting execution of processors in a context such as the one illustrated previously with reference to Figure 1, it is no longer necessary to use an asymmetrical multiprocessing architecture, in so far as it is possible to instantiate a low-parallelism SILC processor for the instructions normally performed by the CPU and a high- parallelism SILC processor for the functions which, in the diagram of Figure 1, are performed by the DSP.

It is, then, convenient to define a new system architecture of the type illustrated in Figure 14, where parts that are identical or are functionally equivalent to the ones illustrated in Figure 1 are designated by the same reference numbers.

In particular, the places occupied in Figure 1 by the processors CPU 1 and DSP are occupied in the diagram of Figure 14 by two processors according to the invention designated by SILC 1 and SILC 2, respectively.

The architecture of Figure 14 enables execution of the processes on both of the processors without having to recompile and duplicate the object codes for the two processors. This is possible because both of the processors SILC 1 and SILC 2 support the same instruction set, and the same binary code can be executed by machines that have different levels of parallelism of execution.

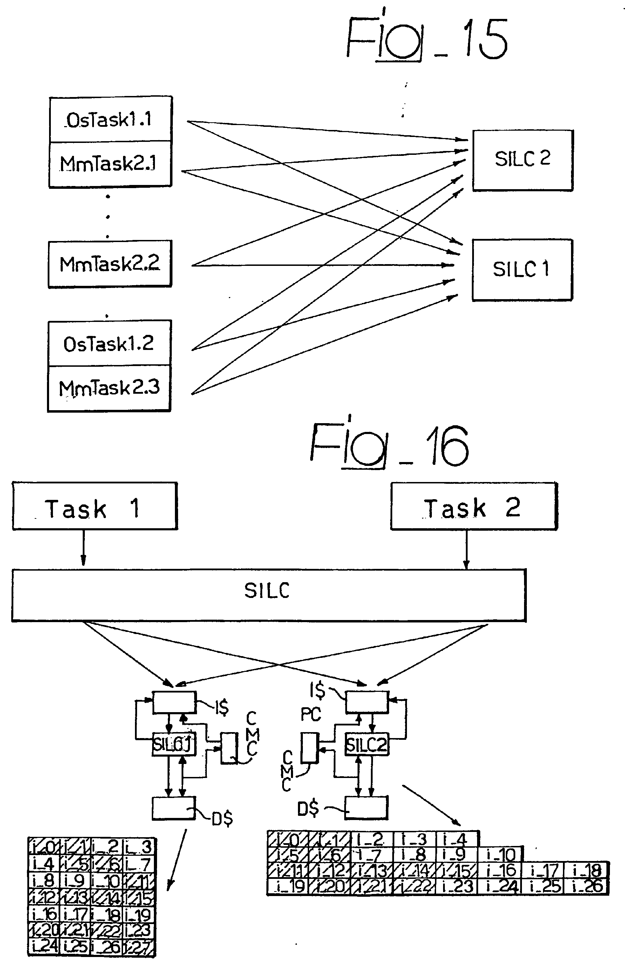

In particular, with reference to Figures 14 and 16, a first step is considered of compiling, using the SILC compiler, the source code of a process named OsTask 1.1 for the operating system. The said code is, in general, characterized by a low intrinsic value of the ILP parameter (see the description of Figure 6) and can be executed by both of the processors. It is, however, evident that, if executed on a processor with high maximum parallelism, the execution time is not reduced much as compared with the situation that arises if a low-parallelism processor is used, on account of the low intrinsic ILP. The said task is, therefore, executed more efficiently on the processor SILC 1.

In addition, consider, in the same said first step of compiling, using the SILC compiler, the source code of a process named MmTask 2.1 for a multimedia audio/video/graphic application. The said code is, in general, characterized by a high intrinsic ILP and, as above, can be nominally executed by both of the processors. It is, however, evident that, if it is executed on a processor with high maximum parallelism, the execution time is reduced as compared to the situation that arises if a low-parallelism processor is used. This task is, therefore, executed more efficiently on the processor SILC 2.

Figure 16 exemplifies what has been said above in the case where SILC 1 has a parallelism 4 and SILC 2 has a parallelism 8.

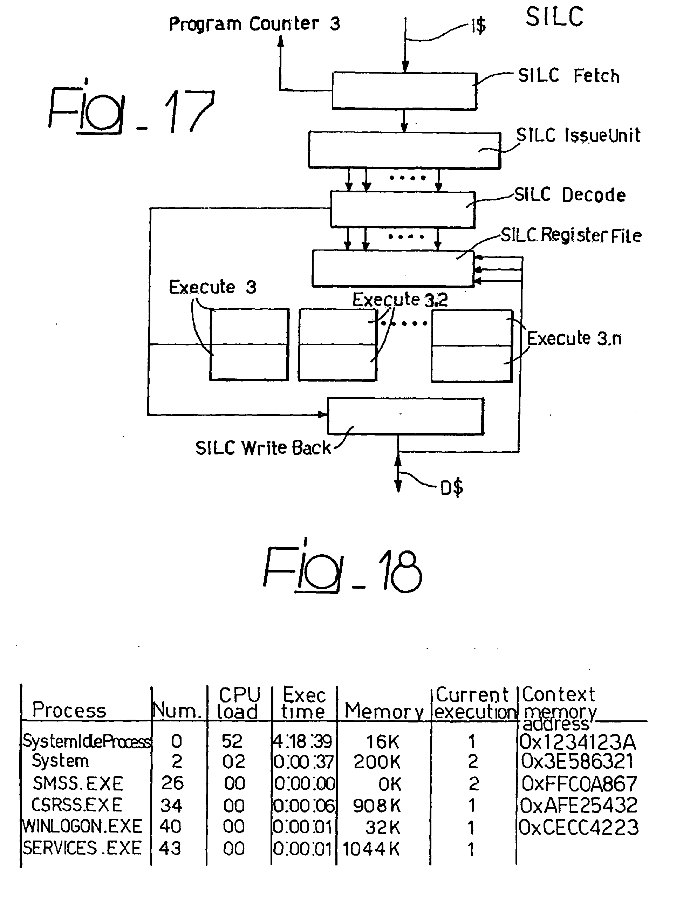

The instructions that make up the tasks of Figure 15 are present in the system memory and are addressed by means of the program counter that each SILC possesses (see the diagram of Figure 17).

An important advantage of the solution according the invention is the binary compatibility between the two processors, where the said compatibility is understood as the capacity for executing indistinctly the processes on the processors involved with different maximum parallelism of execution using the same compiled code, without useless duplications. The above capacity moreover enables dynamic distribution of the computational load on the two processors, so as to equalize the operating frequency of the processors with respect to the maximum, thus obtaining a saving in terms of dissipated power, which, as is well known, is linearly dependent upon the operating frequency of the processor.

In order to clarify better how it is possible to shift execution of a process from one SILC processor to another, consider the existence of a table stored in the system memory MEM.

With reference to Figure 18, proceeding from left to right, the said table is made up of:
- a list of processes (Process) that are being executed or are suspended on any single processor;
- the progressive number (Num) thereof on the basis of the order of activation;
- the percentage of maximum power (CPU load) of the processor that is used by said process;
- the execution time (Exec.time);
- the amount of memory (Memory) of the system used by the process to be able to execute the function for which it is responsible;
- the processor on which the process currently resides (Current execution); and
- the address of the portion of memory in which the data and the instructions are stored, i.e., the operating context (Context memory address).

The above table is accessible by a process referred to as control process, which is executed for a pre-set time on one of the processors. The said process has the possibility of consulting and updating the table in order to equalize the workload of the respective processor with respect to the workload of the other processor or processors present in the system.

The solution according to the invention may, in fact, be extended to an arbitrary number of SILC processors which make up a system and each of which may have any maximum parallelism of execution whatsoever, where said length may vary from one processor to another.

The above table likewise contains the co-ordinates necessary for a processor to be able to take possession of and execute one of the processes mentioned.

Of course, without prejudice to the principle of the invention, the details of implementation and the embodiments may be amply varied with respect to what is described and illustrated herein, without thereby departing from the scope of the present invention, as defined in the annexed claims.

## Claims

1. A process for executing programs on at least one processor (SILC 1, SILC 2) having a given instruction set architecture (ISA), said process comprising the operation of:
- compiling the program to be executed and translating said program into native instructions of said instruction set architecture (ISA), organizing the instructions deriving from the translation of said program into respective bundles arranged in order of successive bundles, each bundle grouping together instructions adapted to be executed in parallel by said at least one processor; and **characterized in** the operations of:
- ordering said bundles of instructions in respective sub-bundles, said sub-bundles identifying a first set of instructions (0M, 1M, 2M, 3M, ...), which must be executed before the instructions belonging to the next bundle of said order, and a second set of instructions (0C, 1C, 2C, 3C, ...) that can be executed both before and in parallel with respect to the instructions belonging to said next bundle of said order, it being possible for at least said second set of instructions to be the null set;
- defining a sequence of execution of the instructions of said sub-bundles in successive operating cycles of said at least one processor (SILC 1, SILC 2), while preventing, in assigning each sub-bundle to an operating cycle of the processor, simultaneous assignment, to the same operating cycle, of two sub-bundles (0M, 1M) corresponding to instructions belonging to said first set of two successive bundles of said order; and
- executing said instructions on said at least one processor (SILC 1, SILC 2) respecting said execution sequence.

2. The process according to Claim 1, **characterized in that** it comprises the operation of selectively varying the overall length of instruction executed for each cycle by said at least one processor (SILC 1, SILC 2).

3. The process according to Claim 1 or Claim 2, **characterized in that** it comprises the operation of identifying the instructions belonging to a sub-bundle of said first set (0M, 1M, 2M, 3M, ...) and of said second set (0C, 1,C, 2C, 3C, ...) by means of a binary symbol set at a first logic value and a second logic value, respectively.

4. The process according to Claim 3, **characterized in that** it comprises the operations of:
- detecting when one between said first set and said second set is the null set; and
- inserting in the respective sub-bundle a fictitious instruction which does not imply any execution of operations (no-operation instruction).

5. The process according to Claim 1 or Claim 2, **characterized in that** it comprises the operation of identifying the instructions belonging to a sub-bundle of said first set (0M, 1M, 2M, 3M, ...) and of said second set (0C, 1,C, 2C, 3C, ...) by means of two distinct binary symbols which identify the last instruction of the respective sub-bundle.

6. The process according to any one of Claims 1 to 5, for executing programs on a multiprocessor system comprising a plurality of processors (SILC 1, SILC 2, ...) having said instruction-set architecture (ISA), **characterized in that** it comprises the operations of:
- instantiating the processors (SILC 1, SILC 2, ...) of said plurality with respective degrees of parallelism of execution with at least two different values of said parallelism of execution in the context of said plurality; and
- selectively distributing execution of the instructions of said sequence of execution among the processors of said plurality (SILC 1, SILC 2, ...), the instructions of said sequence of execution being directly executable by the processors of said plurality (SILC 1, SILC 2) in conditions of binary compatibility.

7. The process according to Claim 6, **characterized in that** it comprises the operation of selectively distributing the execution of the instructions of said sequence among the processors of said plurality (SILC 1, SILC 2), dynamically distributing the computational load of said processors.

8. The process according to Claim 7, **characterized in that** it comprises the operation of selectively distributing the execution of the instructions of said sequence among said processors of said plurality (SILC 1, SILC 2) with the criterion of equalizing the operating frequency of the processors of said plurality (SILC 1, SILC 2, ...).

9. The process according to any one of Claims 6 to 8, **characterized in that** it comprises the operation of performing a process of control executed by at least one of the processors of said plurality so as to equalize its own workload with respect to the other processors of said multiprocessor system.

10. The process according to Claim 9, **characterized in that** it comprises the operation of drawing up a table accessible by said control process, said table comprising items chosen from the group made up of:
- a list of processes (Process) that are being executed or are suspended on any processor of said plurality of processors;
- the progressive number (Num) thereof according to the order of activation;
- the percentage of maximum power (CPU load) of the processor that is used by said process;
- the execution time (Exec.time);
- the amount of memory (Memory) of the system used by said process to be able to execute the function for which it is responsible;
- the processor on which the process currently resides (Current execution); and
- the address of the portion of memory in which the data and the instructions are stored (Context memory address) .

11. A processor system, preferably of a multiprocessor type, configured for operating with the process according to any one of Claims 1 to 10.

## Patentansprüche

1. Verfahren zum Ausführen von Programmen auf mindestens einem Prozessor (SILC 1, SILC 2) mit einer bestimmten Befehlssatzarchitektur (ISA), wobei das Verfahren folgenden Vorgang aufweist:
- Erstellen des auszuführenden Programms und Übersetzen des Programms in spezifische Befehle der Befehlssatzarchitektur (ISA), Organisieren der Befehle, die sich von der Übersetzung des Programms ableiten, in jeweiligen Bündeln, die in der Reihenfolge von aufeinander folgenden Bündeln angeordnet werden, wobei in jedem Bündel Befehle zusammengruppiert werden, die von dem mindestens einen Prozessor parallel ausgeführt werden können;
sowie **gekennzeichnet ist durch** folgende Vorgänge:
- Ordnen der Befehlsbündel in jeweilige Unterbündel, wobei die Unterbündel einen ersten Befehlssatz (0M, 1M, 2M, 3M, ...) identifizieren, der vor den zu dem nächsten Bündel der Reihenfolge zugehörigen Befehlen ausgeführt werden muss, sowie einen zweiten Befehlssatz (0C, 1C, 2C, 3C, ...) identifizieren, der in Bezug auf die zu dem nächsten Bündel der Reihenfolge zugehörigen Befehle sowohl vor diesen als auch parallel mit diesen ausgeführt werden kann, wobei es möglich ist, dass es sich zumindest bei dem zweiten Befehlssatz um den Nullsatz handelt;
Definieren einer Ausführungsabfolge für die Befehle der Unterbündel in aufeinander folgenden Arbeitsszyklen des mindestens einen Prozessors (SILC 1, SILC 2), wobei bei der Zuordnung des jeweiligen Unterbündels zu einem Arbeitszyklus des Prozessors eine gleichzeitige Zuordnung von zwei Unterbündeln (0M, 1M), die zu dem ersten Satz von zwei aufeinander folgenden Bündeln der Reihenfolge zugehörigen Befehlen entsprechen, zu dem gleichen Arbeitszyklus verhindert wird; und
Ausführen der Befehle auf dem mindestens einen Prozessor (SILC 1, SILC 2) unter Berücksichtigung der Ausführungsabfolge.

2. Verfahren nach Anspruch 1,
**dadurch gekennzeichnet, dass** es den Vorgang der selektiven Veränderung der Gesamtlänge des Befehls aufweist, der für jeden Zyklus von dem mindestens einen Prozessor (SILC 1, SILC 2) ausgeführt wird.

3. Verfahren nach Anspruch 1 oder Anspruch 2,
**dadurch gekennzeichnet, dass** es den Vorgang des Identifizierens der Befehle, die zu einem Unterbündel des ersten Satzes (0M, 1 M, 2M, 3M, ...) und des zweiten Satzes (0C, 1,C, 2C, 3C, ...) gehören, mittels eines binären Sybols beinhaltet, das auf einen ersten logischen Wert bzw. einen zweiten logischen Wert gesetzt ist.

4. Verfahren nach Anspruch 3,
**dadurch gekennzeichnet, dass** es folgende Vorgänge aufweist:
- Feststellen, wenn es sich bei einem Satz zwischen dem ersten Satz und dem zweiten Satz um den Nullsatz handelt; und
- Einfügen eines fiktiven Befehls, der keinerlei Ausführung von Operationen (Nicht-Operations-Befehl) impliziert, in das jeweilige Unterbündel.

5. Verfahren nach Anspruch 1 oder Anspruch 2,
**dadurch gekennzeichnet, dass** es den Vorgang des Identifizierens der Befehle, die zu einem Unterbündel des ersten Satzes (0M, 1M, 2M, 3M, ...) und des zweiten Satzes (0C, 1,C, 2C, 3C, ...) gehören, mittels zwei verschiedener binärer Symbole beinhaltet, die den letzten Befehl des jeweiligen Unterbündels identifizieren.

6. Verfahren nach einem der Ansprüche 1 bis 5 zum Ausführen von Programmen auf einem Multiprozessor-System, das eine Mehrzahl von Prozessoren (SILC 1, SILC 2, ...) mit der Befehlssatzarchitektur (ISA) aufweist,
**dadurch gekennzeichnet, dass** es folgende Vorgänge aufweist:
- Instanziieren der Mehrzahl von Prozessoren (SILC 1, SILC 2, ...) mit jeweiligen Graden der Ausführungsparallelität mit mindestens zwei verschiedenen Werten der Ausführungsparallelität im Kontext der Mehrzahl von Prozessoren; und
- selektives Verteilen der Ausführung der Befehle der Ausführungsabfolge unter der Mehrzahl von Prozessoren (SILC 1, SILC 2, ...), wobei die Befehle der Ausführungsabfolge von den mehreren Prozessoren (SILC 1, SILC 2) bei binärer Kompatibilität direkt ausführbar sind.

7. Verfahren nach Anspruch 6,
**dadurch gekennzeichnet, dass** es den Vorgang des selektiven Verteilens der Ausführung der Befehle der Abfolge auf die mehreren Prozessoren (SILC 1, SILC 2) unter dynamischer Verteilung der Rechenlast der Prozessoren beinhaltet.

8. Verfahren nach Anspruch 7,
**dadurch gekennzeichnet, dass** es den Vorgang des selektiven Verteilens der Ausführung der Befehle der Abfolge auf die mehreren Prozessoren (SILC 1, SILC 2) gemäß dem Kriterium des Ausgleichs der Betriebsfrequenz der mehreren Prozessoren (SILC 1, SILC 2, ...) beinhaltet.

9. Verfahren nach eine der Ansprüche 6 bis 8,
**dadurch gekennzeichnet, dass** es den Vorgang des Ausführens eines Steuerprozesses, der von mindestens einem der mehreren Prozessoren ausgeführt wird, in einer derartigen Weise aufweist, dass dessen eigene Arbeitsbelastung in Bezug auf die anderen Prozessoren des Multiprozessor-Systems ausgeglichen wird.

10. Verfahren nach Anspruch 9,
**dadurch gekennzeichnet, dass** es den Vorgang des Erstellens einer Tabelle beinhaltet, auf die der Steuerprozess zugreifen kann, wobei die Tabelle Inhalte aufweist, die aus der Gruppe ausgewählt werden, die Folgendes aufweist:
eine Liste von Prozessen (Process), die auf einem beliebigen Prozessor der Mehrzahl von Prozessoren ausgeführt oder ausgesetzt werden;
die progressive Nummer (Num) von diesen in Abhängigkeit von der Aktivierungsreihenfolge;
den prozentualen Anteil der maximalen Leistung (CPU load) des Prozessors, der von dem Prozess verwendet wird;
die Ausführungszeit (Exec.time);
den Speicherplatz (Memory) des Systems, der von dem Prozess genutzt wird, um die Funktion ausführen zu können, für die er zuständig ist;
den Prozessor, auf dem der Prozess derzeit ausgeführt wird (Current execution); und
die Adresse von dem Bereich des Speichers, in dem die Daten und die Befehle gespeichert werden (Context memory address).

11. Prozessorsystem, vorzugsweise eines Multiprozessor-Typs, das zum Arbeiten mit dem Verfahren nach einem der Ansprüche 1 bis 10 ausgebildet ist.

## Revendications

1. Procédé pour exécuter des programmes sur au moins un processeur (SILC 1, SILC 2) possédant une architecture de jeu d'instructions (ISA), ledit procédé comprenant l'opération consistant à :
- compiler le programme à exécuter et traduire ledit programme en instructions natives de ladite architecture de jeu d'instructions (ISA), organiser les instructions dérivées de la traduction dudit programme en groupes respectifs agencés en ordre de groupes successifs, chaque groupe regroupant des instructions adaptées à être exécutées en parallèle par ledit au moins un processeur ;
et **caractérisé par** les opérations consistant à :
- ordonner lesdits groupes d'instructions dans des sous-groupes respectifs, lesdits sous-groupes identifiant un premier jeu d'instructions (0M, 1M, 2M, 3M, ...), qui doivent être exécutées avant les instructions appartenant au groupe suivant dudit ordre, et un second jeu d'instructions (0C, 1C, 2C, 3C,...), qui peuvent être exécutées à la fois avant et en parallèle avec les instructions appartenant audit groupe suivant dudit ordre, étant possible que ledit second jeu d'instructions soit l'ensemble vide ;
- définir une séquence d'exécution des instructions desdits sous-groupes dans des cycles opératoires successifs dudit au moins un processeur (SILC 1, SILC2) tout en empêchant, lors de l'assignation de chaque sous-groupe à un cycle opératoire du processeur, une assignation simultanée au même cycle opératoire des deux sous-groupes (0M, 1M) correspondant à des instructions appartenant audit premier jeu de deux groupes successifs dudit ordre ; et
- exécuter lesdites instructions sur ledit au moins un processeur (SILC 1, SILC 2) en respectant ladite séquence d'exécution.

2. Procédé selon la revendication 1, **caractérisé en ce qu'**il comprend l'opération consistant à faire varier de manière sélective la longueur totale d'une instruction exécutée pendant chaque cycle par ledit au moins un processeur (SILC 1, SILC2).

3. Procédé selon la revendication 1 ou la revendication 2, **caractérisé en ce qu'**il comprend l'opération consistant à identifier les instructions appartenant à un sous-groupe dudit premier jeu (0M, 1M, 2M, 3M,...) et dudit second jeu (0C, 1C, 2C, 3C, ...) au moyen d'un jeu de symboles binaires respectivement à une première valeur logique et à une seconde valeur logique.

4. Procédé selon la revendication 3, **caractérisé en ce qu'**il comprend les opérations consistant à :
- détecter le moment où un jeu parmi ledit premier jeu et ledit second jeu est l'ensemble vide ; et
- insérer dans le sous-groupe respectif une instruction fictive n'entraînant aucune exécution d'opérations (instruction de non-opération).

5. Procédé selon la revendication 1 ou la revendication 2, **caractérisé en ce qu'**il comprend l'opération consistant à identifier les instructions appartenant à un sous-groupe dudit premier jeu (0M, 1M, 2M, 3M,...) et dudit second jeu (0C, 1C, 2C, 3C,...) au moyen de deux symboles binaires distincts qui identifient la dernière instruction du sous-groupe respectif.

6. Procédé selon l'une quelconque des revendications 1 à 5 pour exécuter des programmes sur un système multiprocesseur comprenant une pluralité de processeurs (SILC 1, SILC2, ...) possédant ladite architecture de jeu d'instructions (ISA), **caractérisé en ce qu'**il comprend les opérations consistant à :
- instancier les processeurs (SILC 1, SILC2, ...) de ladite pluralité avec des degrés respectifs de parallélisme d'exécution avec au moins deux valeurs différentes dudit parallélisme d'exécution dans le contexte de ladite pluralité ; et
- répartir de manière sélective l'exécution des instructions de ladite séquence d'exécution entre les processeurs de ladite pluralité (SILC 1, SILC2, ...), les instructions de ladite séquence d'exécution étant directement exécutables par les processeurs de ladite pluralité (SILC 1, SILC2) dans des conditions de compatibilité binaire.

7. Procédé selon la revendication 6, **caractérisé en ce qu'**il comprend l'opération consistant à répartir de manière sélective l'exécution des instructions de ladite séquence entre les processeurs de ladite pluralité (SILC 1, SILC2), en répartissant de manière dynamique la charge de calcul desdits processeurs.

8. Procédé selon la revendication 7, **caractérisé en ce qu'**il comprend l'opération consistant à répartir de manière sélective l'exécution des instructions de ladite séquence entre lesdits processeurs de ladite pluralité (SILC 1, SILC2) avec le critère d'égalisation de la fréquence de fonctionnement des processeurs de ladite pluralité (SILC 1, SILC2, ...)

9. Procédé selon l'une quelconque des revendications 6 à 8, **caractérisé en ce qu'**il comprend l'opération consistant à exécuter un procédé de commande exécuté par au moins l'un des processeurs de ladite pluralité de façon à égaliser sa propre charge de travail par rapport aux autres processeurs dudit système multiprocesseur.

10. Procédé selon la revendication 9, **caractérisé en ce qu'**il comprend l'opération consistant à créer une table accessible par ledit procédé de commande, ladite table comprenant des éléments choisis dans le groupe constitué de :
- une liste de procédés (Process) en cours d'exécution ou interrompus sur un processeur quelconque de ladite pluralité de processeurs ;
- son numéro progressif (Num) en fonction de l'ordre d'activation ;
- le pourcentage de charge maximale (CPU load) du processeur qui est utilisé par ledit procédé ;
- le temps d'exécution (Exec.time) ;
- la quantité de mémoire (Memory) du système utilisée par ledit procédé pour pouvoir exécuter la fonction dont il est responsable ;
- le processeur sur lequel réside le procédé en cours (Current execution) ; et
- l'adresse de la partie de mémoire dans laquelle sont enregistrées les données et les instructions (Contexte memory address).

11. Système de processeur, de préférence du type multiprocesseur, configuré pour fonctionner avec le procédé selon l'une quelconque des revendications 1 à 10).
